# EUROPEAN PATENT SPECIFICATION

(11) **EP 3 044 682 B1**
(45) Date of publication and mention of the grant of the patent: **01.04.2020**
(21) Application number: 13899841.4
(22) Date of filing: 17.12.2013
(51) Int. Cl.: G06F 16/176

(54) **TRANSACTION QUERY ENGINE**
TRANSAKTIONSABFRAGEMASCHINE
MOTEUR D'INTERROGATION DE TRANSACTION

(43) Date of publication of application: 20.07.2016
(73) Proprietor: Hitachi Vantara LLC, Santa Clara, CA 95054 (US)
(72) Inventor: BRYANT, Alan G., East Walpole, Massachusetts 02032 (US); CLARK, Nathan W., Millbury, Massachusetts 01527 (US); BRAMANTE, Richard D. Jr., Methuen, Massachusetts 01844 (US)
(74) Representative: MERH-IP Matias Erny Reichl Hoffmann Patentanwälte PartG mbB
(86) International application number: PCT/US2013/075855
(87) International publication number: WO 2015/094195

(56) References cited:
- WO-A1-2013/178528
- US-A1- 2011 016 085
- US-A1- 2013 304 705
- US-B1- 6 898 633
- US-B1- 6 898 633
- US-B2- 7 222 132

## Description

### BACKGROUND

### Field

The present disclosure is generally related to a server/client architecture and more specifically, for a transaction query engine.

### Related Art

Synchronization techniques are utilized in the related art to synchronize the clients and the server. In the related art, there is a synchronization mechanism between a web online version file and a client file. In this related art implementation, a remote source sends a notification (e.g., a web online version of a file was created, modified, and/or deleted) to the synchronization module. The synchronization module provides synchronization information to the client application, and the client application performs synchronization between the web online version file and client file.

In distributed architectures, synchronizing changes between a server and one or more clients while keeping the clients lightweight can be problematic. In particular, the synchronization can be problematic when clients need to handle synchronizing changes made by multiple users to the contents of a shared folder.

US 6,898,633 B1 relates to systems and methods for directing client requests and for selecting a back end server to service client requests. A front end server receives client requests and based on the URI of the requests, directs the request to a back end server. The client request can be for a private or a public folder and each back end server typically stores both private and public folders. If the request is for a private folder, then the front end server determines which server stores that user's private folder and directs the client request to that folder. If the request is for a home public folder, the front end server directs the client request to the server that is associated with the private folders of the users. If the request is for an application public folder, then the front end server selects one of the back end servers to service the client request. The front end server always directs the client request to the same server. If the selected server is unavailable, then the front end server is capable of redirecting the client request to an available server.

### SUMMARY

According to the present invention, there is proposed a server according to claim 1 and a method according claim 8. Dependent claims relate to preferred exemplary embodiments. Aspects of the present disclosure may include a server, which may include a memory configured to manage a private file system for a first user and a shared file system which is shared by a plurality of users including the first user; and a processor, configured to create a single token that can include first transaction information indicative of one or more transactions that occurred on the private file system and second transaction information indicative of one or more transactions occurred on the shared file system, send the single token to a client device corresponding to the first user; and receive a request, which is created based on the single token by the client device and requests to obtain a transaction log of the private file system and the shared file system, from the client device.

Aspects of the present disclosure may include a method, which can include managing a private file system for a first user and a shared file system which is shared by a plurality of users including the first user; creating a single token comprising first transaction information indicative of one or more transactions that occurred on the private file system and second transaction information indicative of one or more transactions that occurred on the shared file system; sending the single token to a client device corresponding to the first user; and receiving a request, which is created based on the single token by the client device and requests to obtain a transaction log of the private file system and the shared file system, from the client device. The method may be performed in the form of instructions stored in a non-transitory computer readable storage medium.

### BRIEF DESCRIPTION OF DRAWINGS

FIGS. 1 to 3B illustrates example views of a file system (root (private), shared), transaction logs and event details, in accordance with an example implementation.
FIG. 4 illustrates a system architecture upon which example implementations may be done.
FIG. 5 illustrates an example computer server on which example implementations may be implemented.
FIG. 6 is a flow diagram representing a data synchronization process which utilizes the client request and token management in accordance with an example implementation.
FIG. 7 illustrates a flow diagram for determining changes for a shared file system, in accordance with an example implementation.
FIG. 8 illustrates a flow diagram for a token creation process, in accordance with an example implementation.

### DETAILED DESCRIPTION OF DRAWINGS

The following detailed description provides further details of the figures and example implementations of the present disclosure. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. The implementations described herein are also not intended to be limiting, and can be implemented in various ways, depending on the desired implementation.

Example implementations are related to data synchronization process between a server and a client. The server can provide not only private file system but also one or more shared folders (shared file systems) to the client A private file system is a file system which can be accessed by one user and cannot be accessed by the other users. On the other hand, a shared folder (a shared file system) is a file system which can be shared by multiple users.

Example implementations are directed to a Transaction Query Engine (TQE) which not only provides the chronological listing of all the operations that occurred in a certain time period, but also has an astute implementation of mapping and resolving multiple file systems to a single file system. Therefore a single transaction log can be utilized to present information to the client, which can reduce the complexity of the system. Example implementations of the TQE described herein can handle all data synchronization complexities, making the client simple and light.

Example implementations of the TQE use tokens to track the events occurred on the file systems. The tokens are sent to the client by the server, and are used by the client in each representational state transfer (REST) application programming interface (API) request. The tokens allow the server to determine which events have already been delivered to the client as well as to determine the state of each individual file system. The tokens contain information regarding the file system, mount point, and transaction ID for a private file system. The tokens also can contain information regarding the file system ID, mount point, and transaction ID for a shared folder (shared file system) if the shared folder is available. The mount point for the shared folder is information of the files path for shared folder mount points. Transaction ID for the shared folder is pointer to the last event that occurred for the synchronization to the client.

The entire token generation and management can be intelligently handled by the server. In example implementations, clients include these tokens in their communication with the server. The server (TQE) resolves the shared file system mappings and provides relevant information to the client in a single transaction log.

By use of the example implementations, the TQE can reduce client complexity by reducing the number of client requests made. In related art systems, the synchronization of shared folder contents requires multiple transaction logs be presented in response to multiple client requests. Example implementations may avoid this situation by presenting a single transaction log to the clients and by optimizing client connection resources.

Based on the desired implementation design of the present disclosure, each user is assigned a private file system and each shared folder (shared file system) is assigned its own file system as well. The content of the shared folders can be viewed and modified by multiple users. The server stores a transaction log for each file system (both the private file system and the shared folder (the shared file system)). Every event (transaction) (e.g., create, delete, modify) for a file system has an entry in the transaction log for that file system and has a transaction id associated to the transaction. The transaction ID is generated by the server.

In related art systems, before the introduction of shared folders, a single request was made to the server to synchronize content between the client and the server. When clients made a request to the server, they passed a token to the server. This token has information on the file system ID and the last event (transaction ID) communicated by server to the client. However, in this approach, the client had to be intelligent to track the last received event and make the next request appropriately.

For example, a client may perform the following sets of operations:
- Create a file "MM51.doc"
- Create a directory "Upgrade"
- Delete the file "MM51.doc"
- Rename the directory "Upgrade" to "Release"

The directory structure at the end of the operations is illustrated in the table below:

| Name | Modified | Size |
|---|---|---|
| /Release | Moments ago | |

In the mentioned example, when a first client request is made, transaction ID 0 is provided by the client. Assume "create file MM51.doc" is the first event and is stored as transaction ID 10, "create directory Upgrade" as transaction ID 11, "delete file MM51.doc" as transaction ID 12, for renaming directory to Release, "create directory Release" as transaction ID 13, "delete directory Upgrade" as transaction ID 14 in the file system transaction log. For the next client request, transaction ID 14 will be provided which means requesting the server to provide details of all the events that occurred after transaction ID 14.

Now, if a new client is registered with the server and tries to synchronize data, server returns all the events (transaction ID 10 to 14) for the file system. In this related art example, there is only a single request with the file system ID for the user.

Request from the client includes the token with file system ID and transaction ID.

```
         token
          {
             "file systemId":576460752336977921,
             "transactionId":0
          }
```

The response to the request (made with the above token) from the server includes events that occurred after transaction ID provided in the client request as indicated below.

```
         "transactions":[
          {
             "xid":10,
             "path":"/MM51.doc",
             "event":"CREATE",
          },
          {
             "xid":11,
             "path":"/Upgrade",
             "event":"CREATE",
          },
          {
             "xid":12,
             "path":"/MM51.doc",
             "event":"DELETE" ,
          },
          {
             "xid":13,
             "path":"/Release" ,
             "event":"CREATE",
          }
          {
             "xid":14,
             "path":"/Upgrade",
             "event":"DELETE",
          } ]}
```

However, with the introduction of shared folders (shared file system), the complexity increases. If the related art implementation is utilized, clients are forced to make multiple requests to the server to synchronize the data. For example, if a client has ten shared folders, the client will need to make eleven requests (user's private file system + number of shared folders). The number of client requests in each synchronization attempt can increase significantly in this approach.

As an example, in addition to the operations above, if client becomes part of two shared folders "Share 1" and "Share2", the directory structure may appear as follows:

| Name | Modified | Size |
|---|---|---|
| /Release | Moments ago | |
| /Share1 | Moments ago | |
| /Share2 | Moments ago | |

In related art implementations, the client will have to make three separate calls to the server with three different file system IDs and then keep track of separate responses from each of those calls. This would require clients to track and manage more details and thus increases the client complexity.

In example implementations of the present application, the token is made opaque to the client and client is not required to parse the token. To make a request from server, the client sends a request including the token provided by the server and does not create the token. The token can include packaged information about client file systems, such as file system IDs which can be in the form of information such as metadata, event entries organized by transaction ID and mount points along with the transaction IDs. Transaction IDs can be event entries organized by transaction identifier which can also be in the form of information such as metadata.

Example implementation of the TQE has built in intelligence to parse information in the token, ensure that the user has authorized access to the file system, and lay out the mappings of multiple shared file systems (if any) to the individual user file systems. After the TQE completes the mapping, event streams from multiple file systems are coalesced into a single event stream for the client. Therefore, the client is presented with a single transaction log for those file systems composed of the transaction logs of the various shared folders mapped into the main file system.

The events of the main file system are returned before the events of the mounted file systems. All events thereby occur in an independent manner, and can be safely processed by the client. This approach by the example implementation TQE also results in consistency over all client data for a user and ensures clients are a mirror image of the server.

For the directory structure with shared folders mentioned earlier, the client makes a single request with the token shown below. Clients keep the information about file system IDs in the memory.

```
          {token:
         "{\"resources\":[{f:144115188084244481,m:/,i:0},{f:14411518808
         4244482,m:/Share1,i:0},{f:144115188084244483,m:/Share2,i:0}]"
          }"
          }
```

Depending on the desired implementation, obfuscation of the token can be utilized to reduce the size of the token as the size can become very large with a large number of file systems. The keys used in the example token stand for:

```
         f - File system identifier (ID)
         m - Mount point
         i - XID (transaction ID)
```

As explained above the file system identifier is information which identifies the file system of the client. The mount point information can be used to indicate what information stored in the file system (e.g., folders, files, etc.) are information that is shared with other clients, and which is private information for the client. The mount point of the shared folder is changed by renaming the shared folder or moving the shared folder to other mount point. The transaction ID contains transaction identifier information which can include information uniquely identifying the transaction within the file system.

The response from the server also specifies the token that client is required to use for the next request.

```
         "transactions": [
             {
             "isSharedFolder": false,
             "path": "/MM51.doc",
             "event": "CREATE",
             },
             {
             "isSharedFolder": false,
             "path": "/Upgrade",
             "event": "CREATE",
             },
             {
             "isSharedFolder": false,
             "path": "/MM51.doc",
             "event": "DELETE",
             },
             {
             "isSharedFolder": false,
             "path": "/Release",
             "event": "CREATE",
             },
             {
             "isSharedFolder": false,
             "path": "/Upgrade",
             "event": "DELETE",
             },
             {
             "isSharedFolder": true,
             "path": "/Share1",
             "event": "CREATE",
             },
             {
             "isSharedFolder": true,
             "path": "/Share2",
             "event": "CREATE",
             }, ],
          { "token":
         "{\"resources\":[{\"f\":144115188084244481,\"m\":\"/\",\"i\":10},{
         \"f\":144115188084244482,\"m\":\"/Sharel\",\"i\":0},{\"f\":144115
          188084244483.\"m\":\"/Share2\",\"i\":0)]}"}"
```

In this example, the return token specifies that in the next client request, transaction ID 10 is provided for file system ID 144115188084244481, transaction ID 0 is provided for file system ID 144115188084244482 and transaction ID 0 is provided for file system ID 144115188084244483. The client does not have to interpret and manage these IDs in the token. Instead these tokens are totally opaque to client and the client passes this token for the next request.

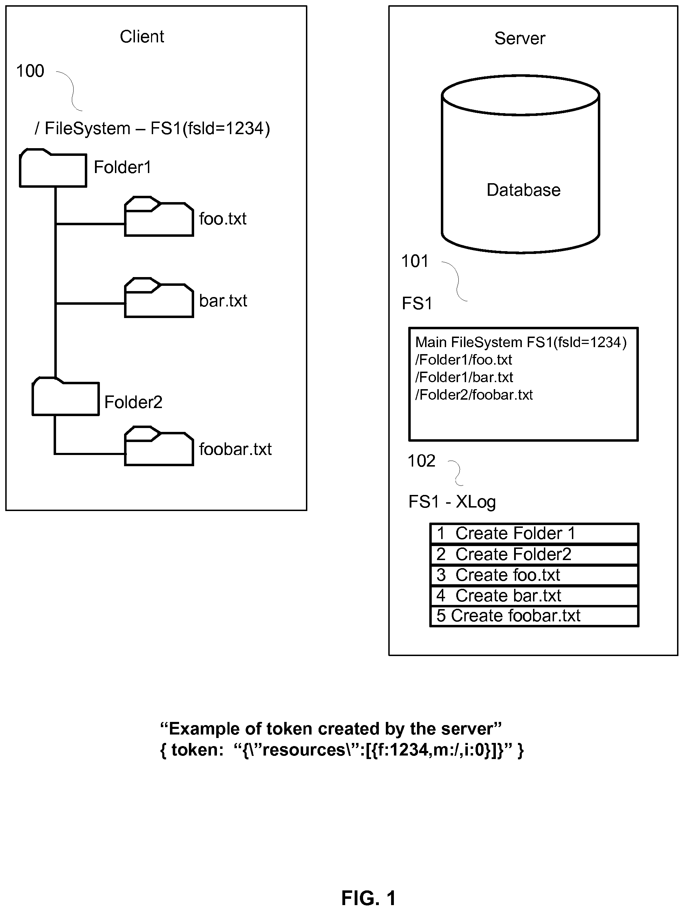

FIGS. 1 to 3B illustrates example views of a file system (root (private), shared), transaction logs and event details, in accordance with an example implementation. In the example scenario view illustrated in FIG. 1, a first user registers a client and creates the directory structure 100 as illustrated. The server stores file system management table 101 (private file system FS1) and the transaction log FS1 102 for all events on the file system in data base. The server provides a private file system (FS1) to the client and does not provide the shared folder to the client at that time. Therefore, a token created by the server only includes the file system ID, the mount point, and the transaction ID for a private file system (FS1) as illustrated. On receipt of a request including the token, the server sends all of the events (transaction ID 1 through 5) to the client to synchronize data between the server and the client.

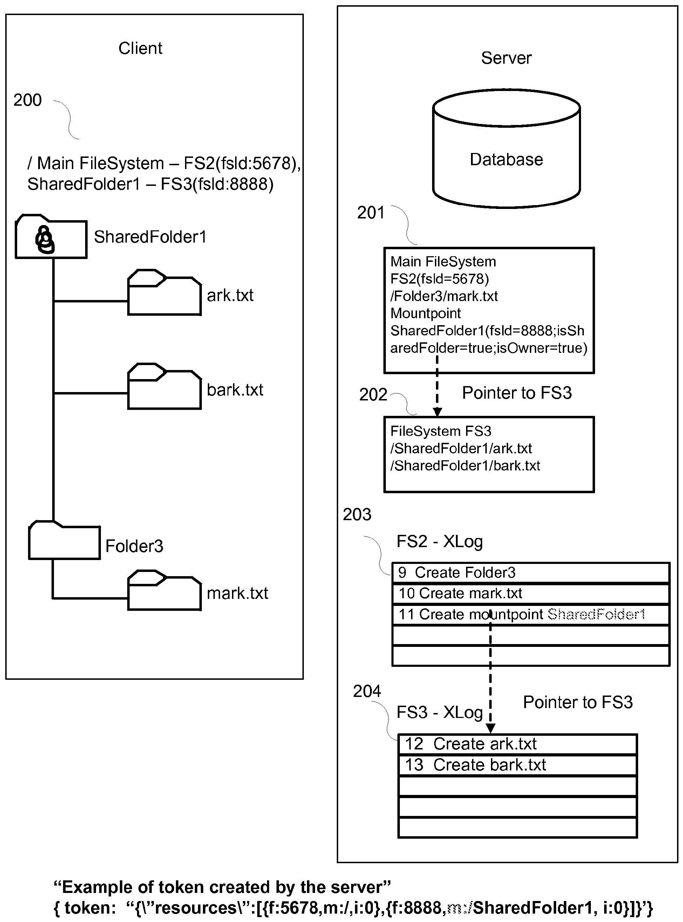

In the example view illustrated in FIG. 2A, a second user registers a client and creates the directory structure 200 as illustrated. The server stores a file system management table for the private file system (FS2) 201 and a file system management table for the shared folder (FS3) 202 in the database. Namely, the server manages the private file system and the shared folder (the shared file system) separately. Moreover, the server stores a transaction log FS2 203 for all events on the private file system and a transaction log FS3 204 for all events on the shared folder (shared file system) in the database. The server provides a private file system (FS2) and the shared folder (FS3) to the client. Therefore, a token created by the server includes not only information regarding the file system ID, the mount point, and the transaction ID for the private file system but also the file system ID, the mount point, and the transaction ID for the shared folder as illustrated. The view from the client is the same as the server view, but the client views a path in the form of "SharedFolder1/ark.txt" whereas the server just views the path as part of the FS2. Since the client recognizes the shared folder as a part of the FS2 (i.e. the client recognizes the shared folder as a root related folder of private file system FS2), the server creates a logical log which is a combination of the transaction log FS2 and the transaction log FS3.

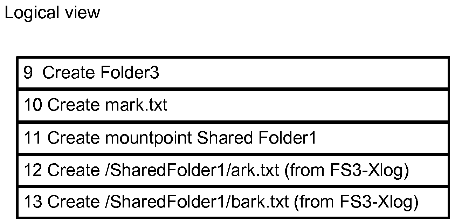

More specifically, the server can be configured to graft shared paths under the root of the private file system at the appropriate path for the client. Namely, the logical log is created by taking transaction logs for all file systems related to the client and generating a single root-relative (i.e., map names from the relative namespace of each file system to the virtual root-relative name according to the client mount point for that file system) event stream using fully qualified root-relative paths for that client. One example of the logical log is illustrated in FIG. 2B. On receipt of a request including the token from the client, the server sends all events (transaction ID 9 through 13) related to the client by referring the logical log.

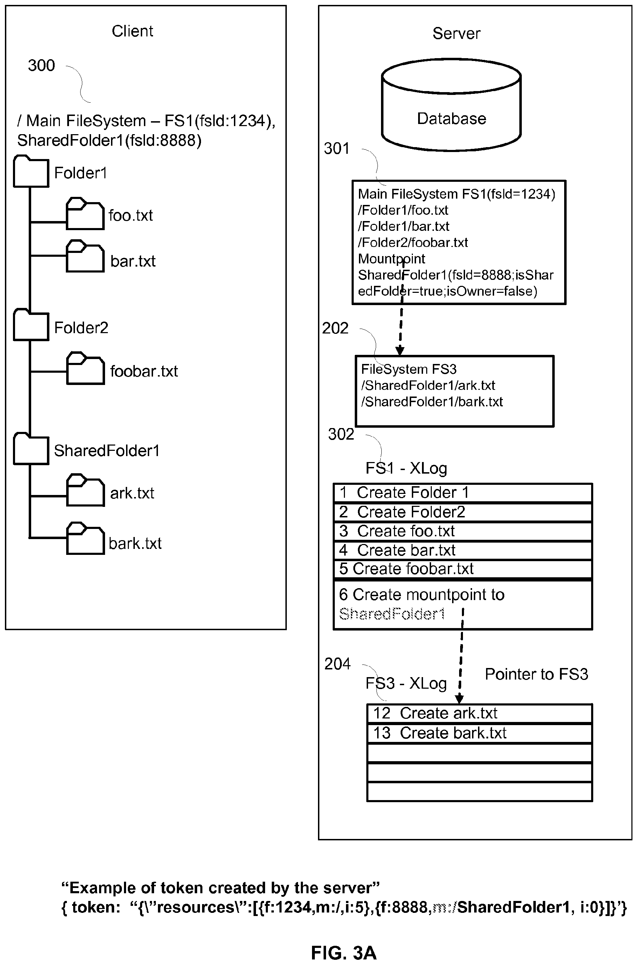

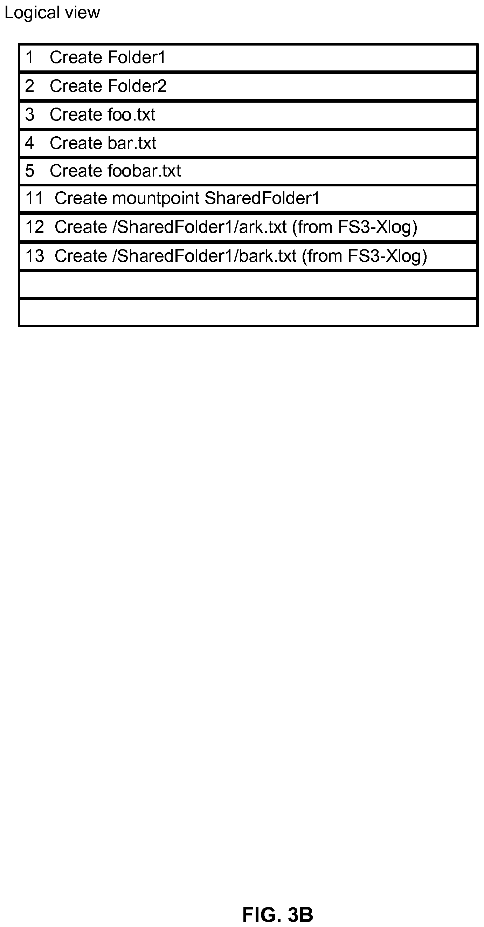

In the example view illustrated in FIG. 3A with directory structure 300, Shared Folder1 created by the second user is shared with the first user in FIG. 1. Then, the server provides not only the private file system (FS1) but also the shared folder (FS3) to the client. On receipt of the next request including the token (illustrated in FIG. 2A) from the client, the server sends all events (transaction ID 11 through 13) related to the client. The client can view all events for SharedFolder1 on the next request (transaction ID 11 through 13). The view of the client for the file path of the shared folder will be "/SharedFolder1/ark.txt", "/SharedFolder1/bark.txt". The logical view as illustrated in FIG. 3B can provide for a logical view of the transactions of the file system. The logical view can include transactions related to shared information among clients of the file system (e.g., SharedFolder1) and private information for the client with the token (e.g., Folder1, Folder2). The transactions are consolidated into the logical view and can be used to update the token for mount points of the file system and for transactions across shared and private information.

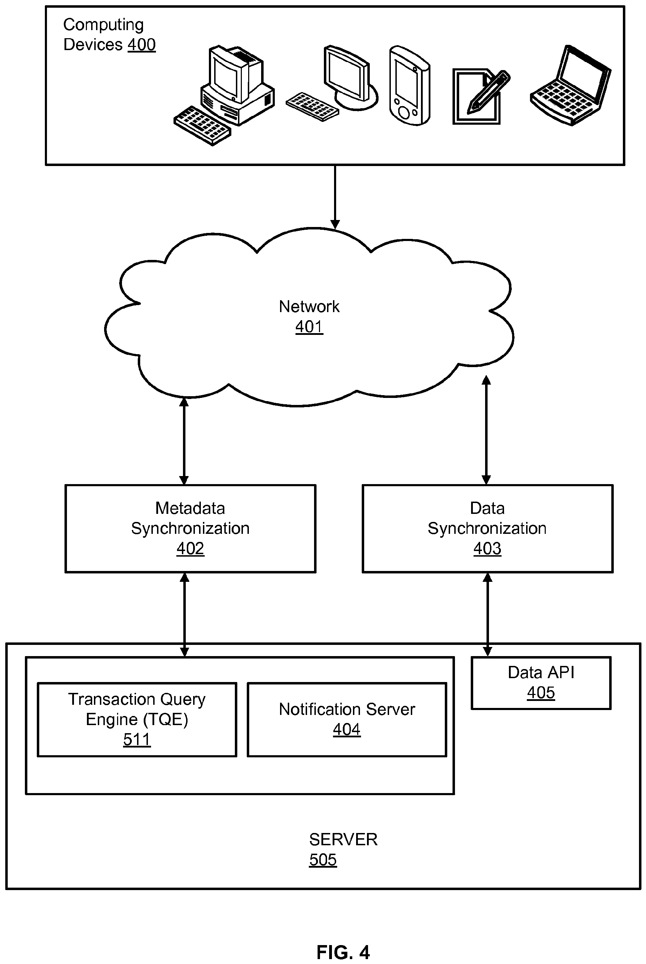

FIG. 4 illustrates a system architecture upon which example implementations may be implemented. The clients may be in the form of one or more computing devices 400 that interact with the server 505 and coupled to the server 505 through network 401. The server 505 may be configured to process metadata synchronization 402 and data synchronization 403. Metadata synchronization 402 is concerned with the discovery of file changes on the client and on the server. The client receives the metadata primarily via TQE in the server. The client sends the metadata to the server when the client detects changes to files locally. Data synchronization 403 is concerned with synchronizing the contents of the files. These can be pulled (GET) from the server to the client or pushed (PUT) from the client to the server. The metadata can also include other information regarding the data, such as if a folder is a shared folder or normal folder. Note that the Notification Server 404 can be implemented as a mechanism that the clients use to discover that there are changes available via TQE, in accordance with any implementation known in the art. The clients could use a variety of mechanisms to discover the existence of available changes, including simply polling TQE periodically. In one example, the Data API, the Notification server 404, the TQE is stored in a storage (or memory) of the server as computer programs, and a processor in the server executes the computer programs.

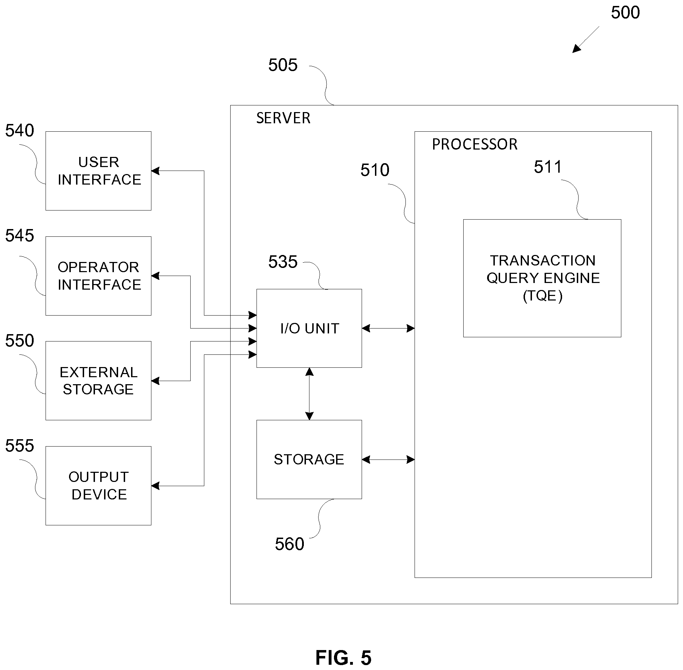

FIG. 5 illustrates an example computer system 500 on which example implementations may be implemented. The computer system 500 includes a server 505 which may involve an I/O unit 535, storage 560 (or memory), and a processor 510 operable to execute one or more units as known to one of skill in the art. The I/O unit can be prepared for each device respectively. The storage 560 can store the database depicted in FIGS. 1 to 3B. The term "computer-readable medium" as used herein refers to any medium that participates in providing instructions to processor 510 for execution, which may come in the form of computer-readable storage mediums, such as, but not limited to optical disks, magnetic disks, read-only memories, random access memories, solid state devices and drives, or any other types of non-transitory or tangible media suitable for storing electronic information, or computer-readable signal mediums, which can include media such as carrier waves. The I/O unit processes input from user interfaces 540 and operator interfaces 545 which may utilize input devices such as a keyboard, mouse, touch device, or verbal command.

The server 505 may also be connected to an external storage 550, which can contain removable storage such as a storage system, portable hard drive, optical media (CD or DVD), disk media or any other medium from which a computer can read executable code. The server may also be connected an output device 555, such as a display to output data and other information to a user, as well as request additional information from a user. The connections from the server 505 to the user interface 540, the operator interface 545, the external storage 550, and the output device 555 may via wireless protocols, such as the 802.11 standards, Bluetooth® or cellular protocols, or via physical transmission media, such as cables or fiber optics. The output device 555 may therefore further act as an input device for interacting with a user.

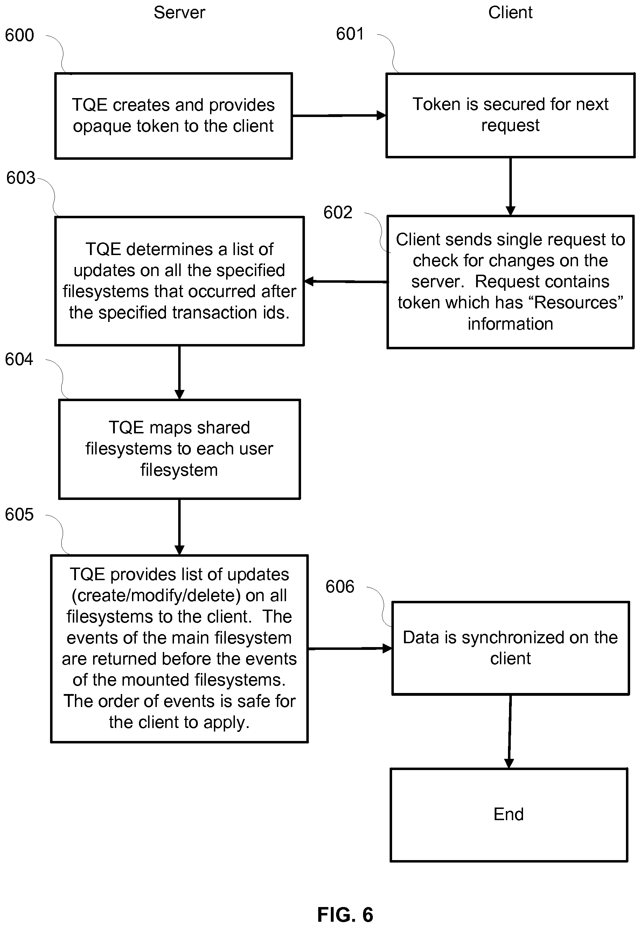

The processor 510 can be configured to facilitate one or more implementations as described, for example in FIGS. 6 to 8. Processor 510 may be configured to execute TQE 511. The TQE may be configured to generate tokens and process a request including the tokens as described in greater detail in FIGS. 6 to 8. For example, the processor can be configured to process a request with a token including transaction identifier information and mount point information as described above; update the token from the transaction information based on the transaction identifier information and the mount point information as described in FIGS. 6 to 8; and send the token to a corresponding client.

FIG. 6 is a flow diagram representing a data synchronization process which utilizes the client request and token management in accordance with an example implementation. The TQE creates an opaque and unique token for a client and provide the created token to the client (600). The token includes information regarding the file system ID, the mount point, and transaction ID for a private file system of the client. Moreover, if the server provides one or more shared folders (shared file systems) to the client, the token also includes information regarding the file system ID, the mount point, and the transaction ID for each shared folder. Namely, the single token includes not only information of the private file system but also information of each shared folder (e.g. the shared file system).

The client secures a token received from the server (601). The client creates a single request based on the received token to obtain the transaction log for each file system related to the client, and sends the created single request to check for changes on the server (602). The request contains a token which has "Resources" information which can encompass all of the file system IDs, mount points and transaction IDs.

The TQE of the server determines a list of updates on all of the specified file systems (e.g. specified by the file system identifier information) that occurred after the specified transaction IDs (603) by utilizing the received request. The TQE can involve traversing the transaction log managed by the server for the transactions occurring after the transaction IDs of the token. The TQE maps shared file systems to the private file system of each user (604) via updating the mount points of the token with the shared and private information of the server. The TQE may provide a list of updates (605) (e.g., create/modify/delete) on all file systems related to the client. The list of updates can include new transaction IDs associated with transactions that were not reflected on the data of the client device, as such transactions occurred after the specified transaction IDs. The events of the file system can be returned before the events of the mounted file systems, which can ensure a safe update order for the client.

The data is then synchronized back to the client (606).

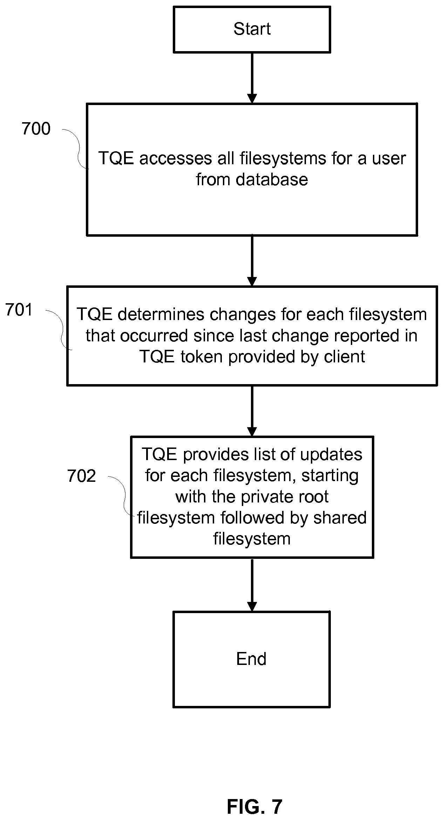

FIG. 7 illustrates a flow diagram for determining changes for a file system, in accordance with an example implementation. This process is a part of a detailed explanation of the process of 603-605 as illustrated in FIG.6. The TQE accesses all of the file systems (e.g., via the file system management table) for a user (e.g., client) from the database (700). The access to all of the file systems can include access to a private file system and shared file systems for the client. The TQE determines changes for each file system that occur since the last change reported in the token provided by the client (701). The TQE then provides a list of updates for each file system, starting with the private information (e.g., private root file system) followed by the shared information (e.g., the shared file system) (702).

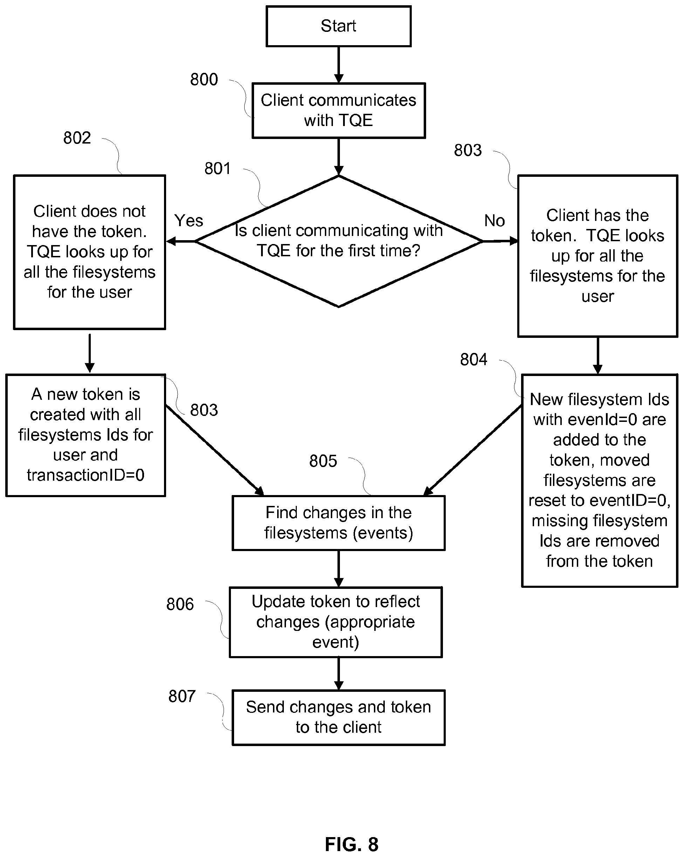

FIG. 8 illustrates a flow diagram for a token creation process, in accordance with an example implementation. This process is a part of a detailed explanation of the process at 600 as illustrated in FIG.6. The client communicates with the TQE (800), wherein the TQE determines if the client is communicating with the TQE for the first time (801). If so (Yes), then the client does not have the token, and the TQE conducts a lookup for all of the file systems (e.g., the private file system and shared file system) for the user (802). A new single token is created with all the file system IDs for the user and a transaction ID of zero (803) as no transactions have previously occurred for this client. Moreover, the new single token includes the mount point for each private file and shared folder (e.g., from the shared file systems).

Otherwise (No), the client does have the previous token. The TQE therefore conducts a lookup for all the file systems for the user (803). New file system IDs with a transaction ID of zero and a mount point are added to the token (804). For moved file systems, the transactionID is reset to zero and the mount point is changed to the destination path. Missing (e.g., deleted, or unshared) file system IDs are removed from the token. The transaction ID is set to zero as a transaction identifier indicating that the file system has changed and that the creation or movement thereof is the very first transaction of the newly formed or moved file system.

After the processing above, the server may find changes in the file systems (805). The changes can include events as described above, for example, in FIG. 6. The server then updates the token to reflect the changes (806), and sends the changes and the token to the client (807).

Finally, some portions of the detailed description are presented in terms of algorithms and symbolic representations of operations within a computer. These algorithmic descriptions and symbolic representations are the means used by those skilled in the data processing arts to most effectively convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only.

## Claims

1. A server (505) comprising:
a memory (260) configured to manage a private file system (FS1, FS2) for a first user and a shared file system (FS3) which is shared by a plurality of users including the first user, the shared file system (FS3) being pointed from the private file system (FS2)¹;
a processor (510), configured to:
create a single token comprising first transaction information indicative of one or more transactions that occurred on the private file system and second transaction information indicative of one or more transactions that occurred on the shared file system (FS3);
send the single token to a client device corresponding to the first user; and
receive a request, which is created based on the single token by the client device and requests to obtain a combined transaction log which includes a first transaction log (203) of the private file system (FS2) and a second transaction log (204) of the shared file system (FS3), from the client device.

2. The server (505) of claim 1, wherein the processor (510) is further configured to send the combined transaction log.²

3. The server (505) of claim 1, wherein the first transaction information comprises a first file system identifier of the private file system, a first mount point of
¹ This sentence is supported by the *Pointer to FS3* shown in Fig. 2A of the original description.
² This Claim is supported by paragraph [38] of the original description. the private file system, and a first transaction ID associated with a transaction that is not reflected on data of the client device.

4. The server (505) of claim 1, wherein the second transaction information comprises a second file system identifier of the shared file system (FS3), a second mount point of the shared file system (FS3), and a second transaction ID associated with a transaction that is not reflected on data of the client device.

5. The server (505) claim 1, wherein the memory (260) is further configured to manage the combined transaction log as a combination of a first transaction log (203) of the private file system (FS2) and a second transaction log (204) of the shared file system (FS3).

6. The server (505) of claim 1, wherein the processor (510) is further configured to create another single token that omits the second transaction information when the shared folder becomes unshared with the first user after creating the single token.

7. The server (505) of claim 1,
wherein the memory (260) is further configured to manage another shared file system which becomes shared with the first user after creating the single token;
wherein the processor (510) is further configured to create another single token comprising third transaction information indicative of one or more transactions that occurred on the another shared file system.

8. A method, comprising:
managing a private file system (FS1, FS2) for a first user and a shared file system (FS3) which is shared by a plurality of users including the first user, the shared file system (FS3) being pointed from the private file system (FS2)³;
creating a single token comprising first transaction information indicative of one or more transactions that occurred on the private file system and second transaction information indicative of one or more transactions that occurred on the shared file system (FS3);
sending the single token to a client device corresponding to the first user; and
receiving a request, which is created based on the single token by the client device and requests to obtain a combined transaction log which includes a first transaction log (203) of the private file system (FS2) and a second transaction log (204) of the shared file system (FS3), from the client device.

9. The method of claim 8, further comprising sending the combined transaction log.⁴

10. The method of claim 8, wherein the first transaction information comprises a first file system identifier of the private file system, a first mount point of the private file system, and a first transaction ID associated with a transaction that is not reflected on data of the client device.

11. The method of claim 8, wherein the second transaction information comprises a second file system identifier of the shared file system (FS3), a second
³ This sentence is supported by the *Pointer to FS3* shown in Fig. 2A of the original description.
⁴ This Claim is supported by paragraph [38] of the original description. mount point of the shared file system (FS3), and a second transaction ID associated with a transaction that is not reflected on data of the client device.

12. The method of claim 8, further comprising managing the combined transaction log as a combination of a first transaction log (203) of the private file system (FS2) and a second transaction log (204) of the shared file system (FS3).

13. The method of claim 8, further comprising creating another single token that omits the second transaction information when the shared folder becomes unshared with the first user after creating the single token.

14. The method of claim 8, further comprising:
managing another shared file system which becomes shared with the first user after creating the single token; and
creating another single token comprising third transaction information indicative of one or more transactions that occurred on the another shared file system.

## Patentansprüche

1. Server (505), der Folgendes umfasst:
einen Speicher (260), der konfiguriert ist, ein privates Dateisystem (FS1, FS2) für einen ersten Anwender und ein gemeinsam verwendetes Dateisystem (FS3), das durch mehrere Anwender, die den ersten Anwender enthalten, gemeinsam verwendet wird, zu managen, wobei vom privaten Dateisystem (FS2)¹ auf das gemeinsam verwendete Dateisystem (FS3) verwiesen wird; und
¹ Dieser Satz wird durch den Zeiger zu FS3, der in Fig. 2A der ursprünglichen Beschreibung gezeigt ist, gestützt.
einen Prozessor (510), der konfiguriert ist zum
Erstellen eines einzelnen Tokens, der erste Transaktionsinformationen, die eine oder mehrere Transaktionen, die im privaten Dateisystem erfolgt sind, anzeigen, und zweite Transaktionsinformationen, die eine oder mehrere Transaktionen, die im gemeinsam verwendeten Dateisystem (FS3) erfolgt sind, umfasst;
Senden des einzelnen Tokens zu einer Client-Vorrichtung, die dem ersten Anwender entspricht; und
Empfangen einer Anforderung, die auf der Grundlage des einzelnen Tokens durch die Client-Vorrichtung erstellt wird und anfordert, ein kombiniertes Transaktionsprotokoll, das ein erstes Transaktionsprotokoll (203) des privaten Dateisystems (FS2) und ein zweites Transaktionsprotokoll (204) des gemeinsam verwendeten Dateisystems (FS3) enthält, von der Client-Vorrichtung zu erhalten.

2. Server (505) nach Anspruch 1, wobei der Prozessor (510) ferner konfiguriert ist, das kombinierte Transaktionsprotokoll zu senden.²
² Dieser Anspruch wird durch Absatz [38] der ursprünglichen Beschreibung gestützt.

3. Server (505) nach Anspruch 1, wobei die ersten Transaktionsinformationen eine erste Dateisystemkennung des privaten Dateisystems, einen ersten Einhängepunkt des privaten Dateisystems und eine erste Transaktionskennung, die einer Transaktion zugeordnet ist, die nicht in Daten der Client-Vorrichtung widergespiegelt ist, umfassen.

4. Server (505) nach Anspruch 1, wobei die zweiten Transaktionsinformationen eine zweite Dateisystemkennung des gemeinsam verwendeten Dateisystems (FS3), einen zweiten Einhängepunkt des gemeinsam verwendeten Dateisystems (FS3) und eine zweite Transaktionskennung, die einer Transaktion zugeordnet ist, die nicht in Daten der Client-Vorrichtung widergespiegelt ist, umfassen.

5. Server (505) nach Anspruch 1, wobei der Speicher (260) ferner konfiguriert ist, das kombinierte Transaktionsprotokoll als eine Kombination eines ersten Transaktionsprotokolls (203) des privaten Dateisystems (FS2) und eines zweiten Transaktionsprotokolls (204) des gemeinsam verwendeten Dateisystems (FS3) zu managen.

6. Server (505) nach Anspruch 1, wobei der Prozessor (510) ferner konfiguriert ist, einen weiteren einzelnen Token zu erstellen, der die zweiten Transaktionsinformationen auslässt, wenn der gemeinsam verwendete Ordner nach dem Erstellen des einzelnen Tokens nicht mehr mit dem ersten Anwender gemeinsam verwendet wird.

7. Server (505) nach Anspruch 1, wobei
der Speicher (260) ferner konfiguriert ist, ein weiteres gemeinsam verwendetes Dateisystem zu managen, das nach dem Erstellen des einzelnen Tokens mit dem ersten Anwender gemeinsam verwendet wird; und
der Prozessor (510) ferner konfiguriert ist, einen weiteren einzelnen Token zu erstellen, der dritte Transaktionsinformationen umfasst, die eine oder mehrere Transaktionen anzeigen, die auf dem weiteren gemeinsam verwendeten Dateisystem erfolgt sind.

8. Verfahren, das Folgendes umfasst:
Managen eines privaten Dateisystems (FS1, FS2) für einen ersten Anwender und eines gemeinsam verwendeten Dateisystems (FS3), das durch mehrere Anwender, die den ersten Anwender enthalten, gemeinsam verwendet wird, wobei vom privaten Dateisystem (FS2)³ auf das gemeinsam verwendete Dateisystem (FS3) verwiesen wird;
Erstellen eines einzelnen Tokens, der erste Transaktionsinformationen, die eine oder mehrere Transaktionen, die im privaten Dateisystem erfolgt sind, anzeigen, und zweite Transaktionsinformationen, die eine oder mehrere Transaktionen, die im gemeinsam verwendeten Dateisystem (FS3) erfolgt sind, umfasst;
Senden des einzelnen Tokens zu einer Client-Vorrichtung, die dem ersten Anwender entspricht; und
Empfangen einer Anforderung, die auf der Grundlage des einzelnen Tokens durch die Client-Vorrichtung erstellt wird und anfordert, ein kombiniertes Transaktionsprotokoll, das ein erstes Transaktionsprotokoll (203) des privaten Dateisystems (FS2) und ein zweites Transaktionsprotokoll (204) des gemeinsam verwendeten Dateisystems (FS3) enthält, von der Client-Vorrichtung zu erhalten.

9. Verfahren nach Anspruch 8, das ferner ein Senden des kombinierten Transaktionsprotokolls umfasst.⁴

10. Verfahren nach Anspruch 8, wobei die ersten Transaktionsinformationen eine erste Dateisystemkennung des privaten Dateisystems, einen ersten Einhängepunkt des privaten Dateisystems und eine erste Transaktionskennung, die einer Transaktion zugeordnet ist, die nicht in Daten der Client-Vorrichtung widergespiegelt ist, umfassen.

11. Verfahren nach Anspruch 8, wobei die zweiten Transaktionsinformationen eine zweite Dateisystemkennung des gemeinsam verwendeten Dateisystems (FS3), einen zweiten Einhängepunkt des gemeinsam verwendeten Dateisystems
³ Dieser Satz wird durch den Zeiger zu FS3, der in Fig. 2A der ursprünglichen Beschreibung gezeigt ist, gestützt.
⁴ Dieser Anspruch wird durch Absatz [38] der ursprünglichen Beschreibung gestützt. (FS3) und eine zweite Transaktionskennung, die einer Transaktion zugeordnet ist, die nicht in Daten der Client-Vorrichtung widergespiegelt ist, umfassen.

12. Verfahren nach Anspruch 8, das ferner ein Managen des kombinierten Transaktionsprotokolls als eine Kombination eines ersten Transaktionsprotokolls (203) des privaten Dateisystems (FS2) und eines zweiten Transaktionsprotokolls (204) des gemeinsam verwendeten Dateisystems (FS3) umfasst.

13. Verfahren nach Anspruch 8, das ferner ein Erstellen eines weiteren einzelnen Tokens umfasst, der die zweiten Transaktionsinformationen auslässt, wenn der gemeinsam verwendete Ordner nach dem Erstellen des einzelnen Tokens nicht mehr mit dem ersten Anwender gemeinsam verwendet wird.

14. Verfahren nach Anspruch 8, das ferner Folgendes umfasst:
Managen eines weiteren gemeinsam verwendeten Dateisystems, das nach dem Erstellen des einzelnen Tokens mit dem ersten Anwender gemeinsam verwendet wird; und
Erstellen eines weiteren einzelnen Tokens, der dritte Transaktionsinformationen umfasst, die eine oder mehrere Transaktionen anzeigen, die auf dem weiteren gemeinsam verwendeten Dateisystem erfolgt sind.

## Revendications

1. Serveur (505) comprenant :
une mémoire (260) configurée pour gérer un système de fichiers privé (FS1, FS2) pour un premier utilisateur et un système de fichiers partagé (FS3) qui est partagé par une pluralité d'utilisateurs incluant le premier utilisateur, le système de fichiers partagé (FS3) étant pointé depuis le système de fichiers privé (FS2)¹ ;
un processeur (510), configuré pour :
créer un jeton unique comprenant des premières informations de transaction indiquant une ou plusieurs transactions qui sont survenues sur le système de fichiers privé et des deuxièmes informations de transaction indiquant une ou plusieurs transactions qui sont survenues sur le système de fichiers partagé (FS3) ;
envoyer le jeton unique à un dispositif client correspondant au premier utilisateur ; et
recevoir une requête, qui est créée sur la base du jeton unique par le dispositif client et des requêtes pour obtenir un journal des transactions combiné qui inclut un premier journal des transactions (203) du système de fichiers privé (FS2) et un deuxième journal des transactions (204) du système de fichiers partagé (FS3), du dispositif client.

2. Serveur (505) selon la revendication 1, dans lequel le processeur (510) est en outre configuré pour envoyer le journal des transactions combiné.²

3. Serveur (505) selon la revendication 1, dans lequel les premières informations de transaction comprennent un premier identificateur de système de fichiers du système de fichiers privé, un premier point de montage du système de fichiers privé et un premier identificateur de transaction associé à une transaction qui n'est pas reflétée sur les données du dispositif client.

4. Serveur (505) selon la revendication 1, dans lequel les deuxièmes informations de transaction comprennent un deuxième identificateur de système de fichiers du système de fichiers partagé (FS3), un deuxième point de montage du système de
¹ Cette phrase est étayée par le pointeur vers FS3 illustré à la Fig. 2A de la description originale.
Cette revendication est étayée par le paragraphe [38] de la description originale. fichiers partagé (FS3) et un deuxième identificateur de transaction associé à une transaction qui n'est pas reflétée sur les données du dispositif client.

5. Serveur (505) selon la revendication 1, dans lequel la mémoire (260) est en outre configurée pour gérer le journal des transactions combiné sous la forme d'une combinaison d'un premier journal des transactions (203) du système de fichiers privé (FS2) et d'un deuxième journal des transactions (204) du système de fichiers partagé (FS3).

6. Serveur (505) selon la revendication 1, dans lequel le processeur (510) est en outre configuré pour créer un autre jeton unique qui omet les deuxièmes informations de transaction lorsque le dossier partagé devient non partagé avec le premier utilisateur après la création du jeton unique.

7. Serveur (505) selon la revendication 1,
dans lequel la mémoire (260) est en outre configurée pour gérer un autre système de fichiers partagé qui devient partagé avec le premier utilisateur après la création du jeton unique ;
dans lequel le processeur (510) est en outre configuré pour créer un autre jeton unique comprenant de troisièmes informations de transaction indiquant une ou plusieurs transactions qui sont survenues sur l'autre système de fichiers partagé.

8. Procédé, consistant à :
gérer un système de fichiers privé (FS1, FS2) pour un premier utilisateur et un système de fichiers partagé (FS3) qui est partagé par une pluralité d'utilisateurs incluant le premier utilisateur, le système de fichiers partagé (FS3) étant pointé depuis le système de fichiers privé (FS2)³ ;
créer un jeton unique comprenant des premières informations de transaction indiquant une ou plusieurs transactions qui sont survenues sur le système de fichiers privé et des deuxièmes informations de transaction indiquant une ou plusieurs transactions qui sont survenues sur le système de fichiers partagé (FS3) ;
envoyer le jeton unique à un dispositif client correspondant au premier utilisateur ; et
³ Cette phrase est étayée par le pointeur vers FS3 illustré à la Fig. 2A de la description originale.
recevoir une requête, qui est créée sur la base du jeton unique par le dispositif client et des requêtes pour obtenir un journal des transactions combiné qui inclut un premier journal des transactions (203) du système de fichiers privé (FS2) et un deuxième journal des transactions (204) du système de fichiers partagé (FS3), du dispositif client.

9. Procédé selon la revendication 8, consistant en outre à envoyer le journal des transactions combiné.⁴

10. Procédé selon la revendication 8, dans lequel les premières informations de transaction comprennent un premier identificateur de système de fichiers du système de fichiers privé, un premier point de montage du système de fichiers privé et un premier identificateur de transaction associé à une transaction qui n'est pas reflétée sur les données du dispositif client.

11. Procédé selon la revendication 8, dans lequel les deuxièmes informations de transaction comprennent un deuxième identificateur de système de fichiers du système de fichiers partagé (FS3), un deuxième point de montage du système de fichiers partagé (FS3) et un deuxième identificateur de transaction associé à une transaction qui n'est pas reflétée sur les données du dispositif client.

12. Procédé selon la revendication 8, consistant en outre à gérer le journal des transactions combiné sous la forme d'une combinaison d'un premier journal des transactions (203) du système de fichiers privé (FS2) et d'un deuxième journal des transactions (204) du système de fichiers partagé (FS3).

13. Procédé selon la revendication 8, consistant en outre à créer un autre jeton unique qui omet les deuxièmes informations de transaction lorsque le dossier partagé devient non partagé avec le premier utilisateur après la création du jeton unique.

14. Procédé selon la revendication 8, consistant en outre à :
gérer un autre système de fichiers partagés qui devient partagé avec le premier utilisateur après la création du jeton unique ; et
⁴ Cette revendication est étayée par le paragraphe [38] de la description originale.
créer un autre jeton unique comprenant des troisièmes informations de transaction indiquant une ou plusieurs transactions qui sont survenues sur l'autre système de fichiers partagé.
